# EUROPEAN PATENT SPECIFICATION

(11) **EP 1 485 627 B1**
(45) Date of publication and mention of the grant of the patent: **25.10.2006**
(21) Application number: 03744442.9
(22) Date of filing: 12.03.2003
(51) Int. Cl.: F16B 25/00

(54) **FIXING DEVICE AND METHOD FOR FIXING TO A SUBSTRATE**
BEFESTIGUNGSVORRICHTUNG UND VERFAHREN ZUR BEFESTIGUNG EINES SUBSTRATS
DISPOSITIF DE FIXATION ET PROCEDE DE FIXATION A UN SUBSTRAT

(30) Priority: 15.03.2002 GB 0206210
(43) Date of publication of application: 15.12.2004
(73) Proprietor: Bickford, Charles, Hockley Essex SS5 4RW (GB)
(72) Inventor: Bickford, Charles, Hockley Essex SS5 4RW (GB)
(74) Representative: Hirsz, Christopher Stanislaw
(86) International application number: PCT/GB2003/001058
(87) International publication number: WO 2003/078852

(56) References cited:
- US-A- 1 809 758
- US-A- 4 238 165
- US-A- 4 653 486
- US-A- 5 957 646

## Description

The invention relates to an improved fixing device having particular, but not exclusive, application in fixing to a substrate, such as timber, plastics materials and friable substrates, such as timber end grain, plywood, blockboard and sterling board edge face, MDF and other particle board (eg chipboard or fibre board), light-weight autoclaved aerated concrete in, for example, block form (eg of the type sold under the trade marks "Thermalite", "Celcon" and "Durox"), plaster, render, soft red brick, breeze (eg breeze blocks) and other friable masonry substrates.

Conventional threaded fixing devices such as screws are difficult to secure in masonry substrates since it is difficult for a conventional thread to find secure location within a bore in such a substrate. Conventional screw threaded fixings are accordingly conventionally secured within bores in masonry substrates by first lining the bore with a lining of relatively soft material into which the threaded fixing can cut its own thread, at the same time compressing the lining against the walls of the bore within the masonry substrate. A typical example of such a lining is that sold under the trade mark Rawlplug. Such linings are available in fibrous and plastics material form and in a wide variety of configurations reflecting a very considerable activity in the art over the years to improve upon the security and ease of use of screw threaded fixing devices used with such liners.

Adopting a somewhat similar principle, alternative forms of fixing device are of metallic material and structured so as to be expansible after introduction into a bore in a masonry material whereby compressive forces against or impingement into the internal surfaces of the bore resist withdrawal of the fixing device from the bore. Reflecting similarly substantial activity in the art, a wide variety of such devices are available. For example, various devices of this kind are available under the above-mentioned trade mark Rawlplug and under the trade marks Fischer and Hilti.

Fixing devices somewhat similar to those sold under the trade mark Rawlplug are also sold under the trade mark Fischer, as mentioned earlier. The Fischer Wallbolt comprises a segmented malleable iron expander shield forming a sleeve about an orthodox screw threaded bolt. The combined assembly is in use inserted into a pre-drilled bore in a masonry substrate and the bolt is tightened with a spanner. This draws a terminal conical wedge backwards into the shield and forces four shield segments outwardly against the sides of the bore.

All fixing elements which rely on compression of an associated member into the wall of a pre-drilled bore give rise to structural disadvantages. The walls of the bore are placed under stress and in many substrate materials there is insufficient strength in the substrate structure to prevent cracking. This is particlarly the case with such materials as lightweight autoclaved aerated concrete but also applies to brick structures. It is especially evident adjacent apertures in a masonry structure where on one side at least there will be comparatively small thickness of substrate material. Of course, fixing elements are commonly required in aperture regions for the fixing of window frames, door liners and similar fittings.

Equally, a good deal of activity has been focused on improvement of screw threaded members themselves in order that they should find secure fixing in masonry materials without the use of liners and without internal expansion. The driving force in these respects is, of course, the fact that liners do not provide totally satisfactory degrees of security, the fact that the need to insert a liner in a bore represents an additional activity which has associated labour costs and the fact that in the case of expansion bolts and such like the compressive forces necessary for security of fixing can result, as noted above, in rupture of masonry materials particularly when adjacent to extremities of bodies of such materials.

UK Patent Specifications Nos 2 115 511 (ITW III) and 2 152 171 (ITW II) disclose masonry fixings comprising a shank having spaced threads in the form of a helical ridge alternating with a parallel land. The flanks of the threads intersect at an angle of 50° to 65° and exhibit a helix angle of 6° to 8.5°. These features are necessarily combined with special conditions for introduction into a masonry bore and are claimed to provide security of fixing without thread striping upon insertion. Both ITW II and III represent examples of effort in the art to provide threaded devices for direct securement in a bore so as to avoid the disadvantages of expansion-type devices enumerated above.

Coarse deep threads are also disclosed in a fixing for use in masonry-like structures in UK Patent Specification No 1 510 686 (ITW IV), a further example of an attempt to provide a direct-fixture fixing element. In this particular arrangement, the crests of the deep threads are notched in order to assist in the cutting of a thread by the fixture in use and to assist in the transmission of masonry debris within the bore. An intermediate shallower thread ridge appears to be the key to providing a design which enables security of fixture to be achieved whilst at the same time recognizing the need to minimize disturbance of the substrate material. Nevertheless, threads penetrate the substrate at fairly closely spaced positions such that pull-out performance is impaired by the shear resistance of the relatively small sections of substrate material between helical ridge turns. A similar arrangement is disclosed in European Patent Application No 0 133 773 (ITW I).

UK Patent Specification No 466039 (Jasper) discloses a fastening screw having a shank provided with a helical thread groove alternating with a land between the grooves. A longitudinal slot provides self-tapping capacity for the coarse deep thread. Jasper does not disclose the fastening screw for use in masonry structures.

A somewhat similar screw device is described in UK Patent Specification No 274833 (Rosenberg). The entry end screw thread configuration has a groove which penetrates the normal diameter of the fixing device together with raised border ridges, this configuration extending over a short length only of the shank. Rosenberg does not recommend the fixing device for masonry fixing, referring generally to fibrous and non-flowing materials and in particular to metal substrates.

European Patent Specification No 0 225 003 (JSM) and UK Patent Application No 2036227 (Tomoyasu) disclose self-locking screws having a somewhat similar configuration. Helical ridges either side of a small land have their crests grooved. Tomoyasu also refers to a structure in which the ridge crests are not grooved but an intermediate ridge is turned through the land so that there are in fact two parallel grooves forming an overall thread. Both JSM and Tomoyasu relate to self-locking devices reliant on the interaction of male and female threads and there is no disclosure of a use in which the male threaded portion is self-tappingly threadedly into a masonry bore.

UK Patent Specification No 2042120 (Gutshall) discloses a headed screw which incorporates a long-pitch helical thread rolled on a cylindrical blank. The rolling leaves untouched a land between adjacent convolutions of the thread. At each juncture between the root of the thread and the adjacent land a helical crest functioning as an auxiliary thread is provided to improve the holding power of the screw. Gutshall refers to use of the disclosed screw in soft, fibrous or low-density materials which are exemplified as wood and plastics. Gutshall does not appear to recommend the disclosed headed screw for fixture self-tappingly in a masonry substrate.

UK Patent Specification No 1541237 (Oratronics) discloses a threaded device for use as an endodontic stabilizer. The shank of the disclosed device is turned with a helical groove having a sufficiently wide pitch to provide a parallel inter-turn land. The crest of the ridge is grooved. UK Patent Specification No 1519139 (Crock) discloses a simpler structure for use in surgical techniques. The structure disclosed comprises a threaded shank comprising a thread groove somewhat reminiscent of that shown by Rosenberg as mentioned above. Crock refers skirtingly and somewhat speculatively to application in building construction and associated fields but there is no reference specifically to the use of the disclosed device for self-tappingly securing in a masonry bore.

In PCT Application No WO 92/10688, fixing to masonry substrates (eg brickwork, blockwork or concrete) involves forming a bore in the substrate (eg in the tension zone or compression zone of a concrete load-supporting member such as a concrete beam) for a fixing device, introduced into the bore self-tappingly or otherwise, which comprises a shank having a bore entry end and an opposed optionally headed end separated from the bore entry end by the length of the shank, at least a portion of the shank length being configured with a thread rolled helical groove depressed into the blank circumference of the shank so as plastically to displace shank material to at least one of the groove sides, the groove being defined adjacent a helical ridge juxtaposed to a side of the groove or between a pair of parallel helical ridges juxtaposed one either side of the groove and formed in either case of the plastically displaced shank material. The ridges are upstanding from the blank circumference of the shank so as to function in use each as a male thread, at least the leading end of the thread preferably being a female thread-cutting male thread in relation to the masonry. The helical ridges and defined helical groove form a helical configuration whose convolutions are spaced apart by an intervening land in relation to which the ridges are raised and the groove is depressed. The land has a width measured axially with respect to the shank of at least 50% of the land shank diameter and the helix angle of the helical ridge is at least 8° and preferably 10° or more. The fixing device is ordinarily inserted into a slightly oversized bore (and thus the shank of the device will be slightly undersized in terms of diameter relative to the drill diameter used to produce the bore).

Another masonry anchor is disclosed in US Patent No. 5,957,646 (Giannuzzi et al.), which shows an enhanced strength screw-type, self-tapping masonry anchor having a shank having a root section surrounded by at least one helical male cutting thread whose crest diameter exceeds the diameter of a hole drilled to receive the anchor. Formed on the root in the helical land between successive convolutions of the thread is a ridge that is raised above the root to define a compacting zone between the ridge and the bank of the hole.

Many modem and some traditional construction materials are friable in nature and do not support high pull-out strengths for fixing devices fixed in them. The reasons for this are manifold. For example, in many friable materials a fixing will not self-thread into a predrilled bore because the initial turns of the fixing do not start a helical channel in the bore, but simply enlarge the outer extremity of the bore by abrasion of substrate material. Many devices which can be threaded into a bore self-tap, but have a propensity for overtorque damage, the bore increasing in cross-section over its length to that of the circumference of the threaded surface of the fixing. These problems are particularly prevalent in autoclaved aerated concrete such as in building block form, but are also found when fixing to such traditional materials as soft red brick (and bricks made of differently coloured fired days) and plasters and renders made of eg lime plaster/render mixes. Timber substrates pose different problems, but in many cases pull-out strength requirements mean that a fixing must pass through a timber member and be secured by a nut on a face opposed to the face through which the fixing is introduced, the latter normally being engaged by a head of the fixing. This means certain constraints when fixing together two members where one face is inaccessible for securement of a nut. Timber end grain is notoriously poor as a fixing base for a fixing device. This is indeed so much so that it is rare to rely solely on screw thread engagement in timber end grain in any real life situation; of course, nut securement is usually precluded in the case of fixings in timber end grain.

According to the invention, there is provided, in a first aspect, a fixing device for fixing into a substrate composed of timber or friable masonry material, such as autoclaved aerated concrete, a cured plaster or render coat, plasterboard or soft red or other soft brick, the fixing device comprising a shank having a first end and a second end and an optional head at the second end, wherein the shank of the fixing device is configured with at least one helically extending thread upstanding to a full height from the shank in a plurality of convolutions around the shank, wherein the thread has a height above the shank which is reduced adjacent the first end of the shank and which gradually increases to its full height and which gradually decreases in height from its full height as it approaches the second end of the shank.

In a preferred embodiment, the height of the thread increases from the reduced height to the full height over at least a first convolution of the thread adjacent the first end. Preferably, the reduced height is no more than 50% of the full height. Preferably, the reduced height is at the level of the shank. In one preferred embodiment, the thread gradually decreases in height from its full height as it approaches the second end of the shank. Preferably, the height of the thread decreases from the full height to a lesser height over at most a final convolution of the thread adjacent the second end. Preferably, the lesser height is at the level of the shank. Preferably, the height of the thread decreases from the full height to the lesser height over half of the final convolution of the thread adjacent the second end.

In a preferred embodiment, the shank of the fixing device is configured with a plurality of helically extending threads upstanding from the shank and wherein each of the threads has a height above the shank which is reduced adjacent the first end of the shank and which gradually increases to its full height.

Preferably, the shank of the fixing device is configured with a pair of parallel threads upstanding from a helically extending land to define therebetween a helically extending groove. The groove may extend below the level of the land. The pair of threads preferably have the same height above the land.

In a second aspect, the invention provides a fixing method which comprises turning into a bore in a substrate a fixing device as defined above according to the invention, the bore having a diameter less than the diameter of the fixing device shank, the fixing device being utilised to fix a member to the substrate.

Preferably, the substrate is composed of timber or friable masonry material, such as autoclaved aerated concrete, a cured plaster or render coat, plasterboard or soft red or other soft brick.

In particular, the friable masonry material may be masonry material having a crush resistance of less than 5N/mm², for example a crush resistance of less than or equal to 3.5N/mm².

The friable masonry material may be cementitious or clinker-based.

In the case of timber substrates, the timber substrate is in particular timber end grain. In such cases, the fixing device is turned into the bore in the substrate by application of axial force. The application of axial force may be application of intermittent dynamic force along the axis of the shank of the fixing device. In particular, the axial force may be a percussive force applied by hammering.

An embodiment of the invention will now be described, by way of example only, with reference to the accompanying drawings of which:-
Figure 1 shows an embodiment of a fixing device according to the invention; and
Figure 2 is a schematic cross-sectional view of the fixing device of Figure 1 showing the threads in an exaggerated, enlarged scale.

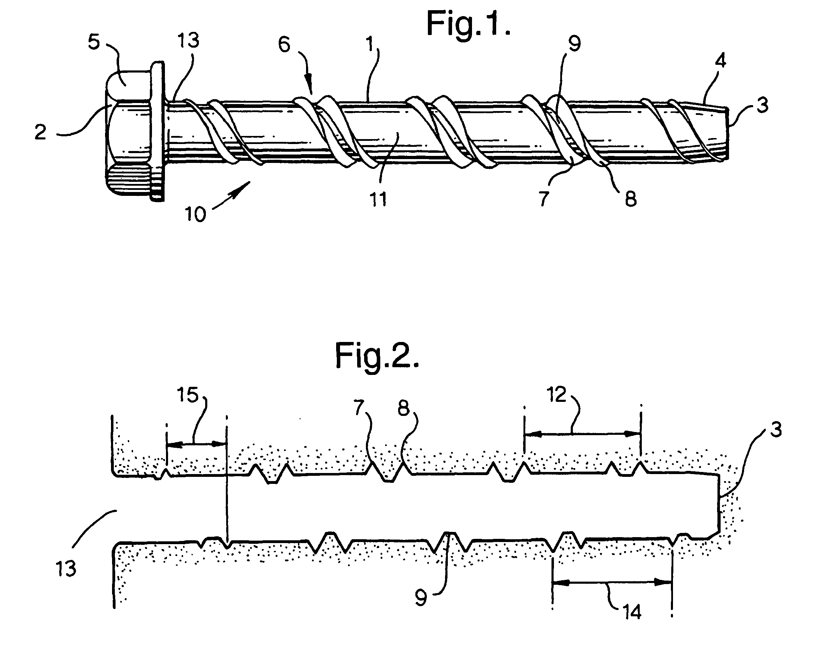

The fixing device 10 shown in Figure 1 of the drawings comprises a bright zinc plated steel shank 1 of solid right circular cylindrical form. The shank is formed by cold forming with a head 2 at one end 13, which is in conventional hexagonal form comprising six faces 5 intended for location in the jaw of an open spanner of complementary size and shape or by a suitable socket or ring spanner. Obviously, however, the head 2 may be formed with a different type of head such as a countersink head conventionally slotted as for conventional blade screwdriver engagement or formed with a Posidrive screw engagement depression. Alternatively, the head may be formed for a so-called TORX or HEX drive, or any other kind of drive, as will be appreciated by those skilled in the art.

The end 3 of shank 1 opposed to head 2 is formed with an annular cant or bevel 4 intended to assist in introduction of the tip of the shank into an appropriately sized and configured bore in a substrate.

Shank 1 is formed by thread rolling with a helical bore wall engagement configuration designated generally by reference numeral 6. This configuration comprises a pair of spaced apart helical ridges 7 and 8. Both helical ridges 7 and 8 are formed on shank 1 with identical helix angles with the result that the ridges are, of course, parallel one to another and separated by the same pitch throughout the extent of the helix. Both ridges serve as a screw thread for fixing the fixing device in a bore in an appropriate substrate. Both ridges are of generally frusto-conical form in cross-section. Each ridge has an upstand from the surrounding basal surface of the shank 1 which is uniform throughout the helix, with both upstands being the same as one another. Ridge 7 defines with ridge 8 a helical groove 9 forming part of helical engagement configuration 6.

The turns of helical bore wall engagement configuration 6 are separated by turns of a helical land 11. The groove 9 may have a depth that extends to the same level as the land 11, such that the groove is simply defined between the threads 7 and 8, or the depth of groove 9 may extend below the level of the land 11 such that it is cut out of the shank 1. For example, the groove may extend approximately 0.5mm below the surface of the shank. The groove itself may have any desired width, for example a width of between 2mm and 10mm.

It will be apparent that the screw thread arrangement has a pitch, which is indicated by reference numeral 12 in Figure 2, which is equivalent, in an axial direction of the device to one convolution of the thread configuration 6 about the shank 1. The ridges 7 and 8 have a height above the level of the land 11 which is substantially constant throughout the length of the shank 1, except at the two ends 3 and 13 thereof. At the end 3 opposite the head 2, the height of the ridges 7 and 8 is decreased in a constant fashion, so that they have a reduced height nearest the end 3. The reduced height is 50% of the full height and the ridges gradually taper up to the full height over at least half of the first convolution 14 of the thread configuration 6, and preferably over the whole length of the first convolution 14. In other embodiments, the reduced height may be 25% of the full height, or may even be zero, i.e. at the level of the land 11. Furthermore, the depth of the groove 9 below the level of the land 11 may also reduced, so that the depth gradually increases over the first convolution of the thread configuration to its full depth.

Reduction of the height of the threads 7 and 8 at the end 3 reduces the amount of torque required to turn the device into a substrate. Although such holes are usually pre-drilled, the hole diameter is at most that of the shank, so that the threads must cut into the substrate. By reducing the torque needed to turn the device, it becomes much easier to insert the device into the substrate thereby reducing the amount of strain exerted on the material of the device (usually steel), so that its integrity is maximised. Binding of the device to the substrate material during installation is also minimised. By having the thread tapered, the first convolution of the thread therefore only cuts the substrate to a reduced depth, as compared to known threads which perform a full depth cut by the first convolution, so that the following convolution of the thread also has some cutting to perform. Therefore, the threads are less likely to lose their cutting edge, especially cutting into dense concrete and are less likely to flatten, as happens in known devices. The height of the threads can therefore be increased in height, for example by at least 25% over known devices, thereby gaining deeper penetration into the substrate and therefore increasing the tensile loading, if required.

Similarly, the height of the ridges 7 and 8 is decreased in a constant fashion at the end 13 nearest the head 2, so that they have a reduced height nearest the head 2. The reduced height may again be 50% of the full height and the ridges gradually taper down over half of one convolution 15 of the thread configuration 6. As before, the reduced height may be 25% of the full height, or may even be zero, i.e. at the level of the land 11. Furthermore, the depth of the groove 9 below the level of the land 11 may also gradually reduced over the last half convolution so that it does not extend below the level of the land 11 near the head 2.

Reduction of the height of the threads 7 and 8 at the end 13 reduces the amount of strain exerted on the material of the device, so that the strength of the device, particularly at the point where the shank meets the head 2 is improved. Reduction of the depth of the groove also reduces any such weaknesses. The torque applied to the device by operatives during installation can therefore be increased without compromising the integrity of the fixing.

It will be appreciated that the fixing device may be made in a range of sizes. The particular parameters of a fixing device other than diameter (ie M size) will vary according to the M size of the fixing device. Fixing elements according to the invention can be manufactured by the steps of cold-forging and thread-rolling, bright zinc plating and heat treatment without resort to complex assembly operations such as are normally associated with an expansion bolt. This produces economies in terms of materials and manufacturing costs as well as the economies associated with relative ease of installation and use noted below.

It will be appreciated from the foregoing that the invention is simple to use in practice, the device readily self-tapping when turned into a bore in a variety of materials. The device holds firmly in timber end grain and on continued turning its head, if any, will perforate and embed in the timber. Even a high degree of rotation will not cause the device to ream the bore of an autoclaved aerated concrete block, but rather self-threading penetration continues. Over-torquing is per se generally impossible in soft red bricks. Under ultimate tensile loads in most substrates the device does not fail or cone out the substrate. As the tensile load is increased the bolt starts to withdraw but as each convolution of the thread emerges the following convolution takes the tensile load back to its ultimate. This gives the device a fail-safe characteristic. When hammered into a predrilled hole into end and cross grained timber the bolt turns on impact and cuts its own thread perfectly into the timber. The clamping force timber to timber is excellent in both end and cross grain situations. It will replace the necessity to use standard nuts and bolts. The product can be removed by unscrewing even though it has been hammered in.

Whilst only one particular embodiment of the invention has been described above, it will be appreciated that a person skilled in the art can make modifications and improvements without departing from the scope of the present invention. For example, although the invention has been described with a particular thread configuration of a pair of parallel threads defining a groove therebetween with a land extending between the convolutions of the thread configuration, other thread configurations are possible within the scope of the invention, provided the thread has a height above the shank which is reduced adjacent the first end of the shank and which gradually increases to its full height. In particular, the invention can be applied to single threaded, double threaded or multiple threaded fasteners, whether or not they have defined grooves between the threads.

## Claims

1. A fixing device (10) for fixing into a substrate composed of timber or friable masonry material, such as autoclaved aerated concrete, a cured plaster or render coat, plasterboard or soft red or other soft brick, the fixing device (10) comprising a shank (1) having a first end (3) and a second end (13) and an optional head (2) at the second end (13), wherein the shank of the fixing device (10) is configured with at least one helically extending thread (6) upstanding to a full height from the shank (1) in a plurality of convolutions around the shank (1), wherein the thread (6) has a height above the shank (1) which is reduced adjacent the first end (3) of the shank (1) and which gradually increases to its full height and which gradually decreases in height from its full height as it approaches the second end (13) of the shank (1).

2. A fixing device according to claim 1, wherein the height of the thread increases from the reduced height to the full height over at least a first half-convolution of the thread adjacent the first end.

3. A fixing device according to either claim 1 or claim 2. wherein the reduced height is no more than 50% of the full height.

4. A fixing device according to any preceding claim, wherein the height of the thread decreases from the full height to a lesser height over at most a final convolution of the thread adjacent the second end.

5. A fixing device according to any preceding claim, wherein the shank of the fixing device is configured with a plurality of helically extending threads upstanding from the shank and wherein each of the threads has a height above the shank which is reduced adjacent the first end of the shank and which gradually increases to its full height.

6. A fixing device according to any preceding claim, wherein the shank of the fixing device is configured with a pair of parallel threads upstanding from a helically extending land to define therebetween a helically extending groove.

7. A fixing device according to claim 6, wherein the groove extends below the level of the land.

8. A fixing device according to claim 7, wherein the groove has a depth below the level of the land which is reduced adjacent the first end of the shank.

9. A fixing device according to claim 7 or claim 8, wherein the groove has a depth below the level of the land which is reduced as it approaches the second end of the shank.

10. A fixing device according to any one of claim 6 to 9, wherein the pair of threads have the same height above the land.

11. A fixing method comprising turning into a bore in a substrate a fixing device according to any preceding claim, the bore having a diameter less than an external diameter of the fixing device including the at least one thread, the fixing device being utilised to fix a member to the substrate.

12. A fixing method according to claim 11, wherein the substrate is composed of timber or friable masonry material, such as autoclaved aerated concrete, a cured plaster or render coat, plasterboard or soft red or other soft brick.

13. A fixing method according to claim 12, wherein the friable masonry material comprises masonry material having a crush resistance of less than 5N/mm².

14. A fixing method according to any one of claims 11 to 13, wherein the fixing device is turned into the bore in the substrate by application of axial force.

15. A fixing method according to claim 14, wherein the application of axial force comprises application of intermittent dynamic force along the axis of the shank of the fixing device.

16. A fixing method according to claim 15, wherein the axial force comprises a percussive force applied by hammering.

## Patentansprüche

1. Befestigungsvorrichtung (10) zum Befestigen in einem Substrat, das aus Holz oder bröckligem Mauerwerkmaterial gebildet ist, wie beispielsweise dampfgehärteter Gasbeton, ausgehärteter Mörtel oder Überzugputz, Gipskarton oder weicher Ziegelstein oder andersartiger weicher Stein, wobei die Befestifungsvorrichtung (10) einen Schaft (1) mit einem ersten Ende (3) und einem zweiten Ende (13) und einen optionalen Kopf (2) an dem zweiten Ende (13) aufweist, wobei der Schaft der Befestigungsvorrichtung (10) mit wenigstens einem helixförmig verlaufenden Gewindegang (6) ausgebildet ist, der in voller Höhe von dem Schaft (1) in mehreren Windungen um den Schaft (1) herum vorsteht, wobei der Gewindegang (6) eine Höhe über dem Schaft (1) aufweist, die nahe dem ersten Ende (3) des Schaftes (1) verringert ist und die auf ihre volle Höhe graduell zunimmt und die von ihrer vollen Höhe bei Annäherung zu dem zweiten Ende (13) des Schaftes (1) hin abnimmt.

2. Befestigungsvorrichtung nach Anspruch 1, wobei die Höhe des Gewindegangs von der reduzierten Höhe zu der vollen Höhe über wenigstens eine erste halbe Windung des Gewindegangs nahe dem ersten Ende zunimmt.

3. Befestigungsvorrichtung nach einem der Ansprüche 1 oder 2, wobei die reduzierte Höhe nicht mehr als 50 % der vollen Höhe beträgt.

4. Befestigungsvorrichtung nach einem der vorangehenden Ansprüche, wobei die Höhe des Gewindegangs von der vollen Höhe auf eine geringere Höhe über höchstens eine letzte Windung des Gewindegangs nahe dem zweiten Ende abnimmt.

5. Befestigungsvorrichtung nach einem der vorangehenden Ansprüche, wobei der Schaft der Befestigungsvorrichtung mit einer Mehrzahl helixförmig verlaufender Gewindegänge ausgebildet ist, die von dem Schaft vorstehen, und wobei jeder der Gewindegänge eine Höhe über dem Schaft aufweist, die nahe dem ersten Ende des Schaftes reduziert ist und die auf ihre volle Höhe graduell zunimmt.

6. Befestigungsvorrichtung nach einem der vorangehenden Ansprüche, wobei der Schaft der Befestigungsvorrichtung mit einem Paar paralleler Gewindegänge ausgebildet ist, die von einem helixförmig verlaufenden Grund vorstehen, so dass sie dazwischen eine helixförmig verlaufenden Vertiefung ausbilden.

7. Befestigungsvorrichtung nach Anspruch 6, wobei die Vertiefung unterhalb des Niveaus des Grundes verläuft.

8. Befestigungsvorrichtung nach Anspruch 7, wobei die Vertiefung eine Tiefe unterhalb des Niveaus des Grunds aufweist, die nahe dem ersten Ende des Schafts verringert ist.

9. Befestigungsvorrichtung nach Anspruch 7 oder 8, wobei die Vertiefung eine Tiefe unterhalb des Niveaus des Grunds aufweist, die bei Annäherung an das zweite Ende des Schaftes verringert ist.

10. Befestigungsvorrichtung nach einem der Ansprüche 6 bis 9, wobei das Gewindegangpaar dieselbe Höhe oberhalb des Grundes aufweist.

11. Verfahren zum Befestigen umfassend ein Eindrehen einer Befestigungsvorrichtung nach einem der vorangehenden Ansprüche in eine Bohrung in einem Substrat, wobei die Bohrung einen Durchmesser aufweist, der kleiner als ein Außendurchmesser der Befestigungsvorrichtung mit dem wenigstens einem Gewindegang aufweist, wobei die Befestigungsvorrichtung dazu eingesetzt wird, ein Element an dem Substrat zu befestigen.

12. Verfahren zum Befestigen nach Anspruch 11, wobei das Substrat aus Holz oder bröckeligem Mauerwerkmaterial, wie beispielsweise dampfgehärtetem Gasbeton, gehärtetem Mörtel oder Überzugputz, Gipskarton oder weichem Ziegelstein oder anderem weichem Stein, besteht.

13. Verfahren zum Befestigen nach Anspruch 12, wobei das bröckelige Mauerwerkmaterial Mauerwerkmaterial mit einer Druckfestigkeit von weniger als 5N/mm² aufweist.

14. Verfahren zum Befestigen nach einem der Ansprüche 11 bis 13, wobei die Befestigungsvorrichtung in die Bohrung in dem Substrat durch Aufbringen einer Axialkraft eingeschraubt wird.

15. Verfahren zum Befestigen nach Anspruch 14, wobei das Aufbringen des axialen Kraft ein Aufbringen einer intermittierenden dynamischen Kraft entlang der Schaftachse der Befestigungsvorrichtung umfasst.

16. Verfahren zum Befestigen nach Anspruch 15, wobei die axiale Kraft eine durch Hammern aufgebrachte Schlagkraft umfasst.

## Revendications

1. Dispositif de fixation (10) destiné à fixer à un substrat composé de bois ou d'un matériau de maçonnerie friable, tels que du béton cellulaire autoclavé, du plâtre durci ou une couche d'enduit, une plaque de plâtre ou une brique tendre rouge ou une autre brique tendre, le dispositif de fixation (10) comprenant une tige (1) ayant une première extrémité (3) et une seconde extrémité (13) et une tête optionnelle (2) au niveau de la seconde extrémité (13), dans lequel la tige du dispositif de fixation (10) est configurée avec au moins un filet s'étendant de façon hélicoïdale (6) se dressant de toute sa hauteur depuis la tige (1) dans une pluralité de convolutions autour de la tige (1), dans lequel le filet (6) a une hauteur au-delà de la tige (1) qui est réduite de façon adjacente à la première extrémité (3) de la tige (1) et qui augmente progressivement vers sa hauteur maximale et qui diminue progressivement de sa hauteur maximale au fur et à mesure qu'il approche de la seconde extrémité (13) de la tige (1).

2. Dispositif de fixation selon la revendication 1, dans lequel la hauteur du filet augmente de sa hauteur réduite jusqu'à sa hauteur maximale sur au moins une première demi convolution du filet adjacent à la première extrémité.

3. Dispositif de fixation selon la revendication 1 ou la revendication 2, dans lequel la hauteur réduite n'est pas supérieure à 50% de la hauteur maximale.

4. Dispositif de fixation selon l'une quelconque des revendications précédentes, dans lequel la hauteur du filet diminue de sa hauteur maximale jusqu'à une hauteur moindre sur au maximum une convolution finale du filet adjacent à la seconde extrémité.

5. Dispositif de fixation selon l'une quelconque des revendications précédentes, dans lequel la tige du dispositif de fixation est configurée avec une pluralité de filets s'étendant de façon hélicoïdale se dressant depuis la tige et dans lequel chacun des filets a une hauteur au-delà de la tige qui est réduite de façon adjacente à la première extrémité de la tige et qui augmente progressivement jusqu'à sa hauteur maximale.

6. Dispositif de fixation selon l'une quelconque des revendications précédentes, dans lequel la tige du dispositif de fixation est configurée avec une paire de filets parallèles se dressant depuis un méplat s'étendant hélicoïdalement pour définir entre ces derniers une rainure s'étendant de façon hélicoïdale.

7. Dispositif de fixation selon la revendication 6, dans lequel la rainure s'étend en dessous du niveau du méplat.

8. Dispositif de fixation selon la revendication 7, dans lequel la rainure a une profondeur en dessous du niveau du méplat qui se réduit de façon adjacente à la première extrémité de la tige.

9. Dispositif de fixation selon la revendication 7 ou la revendication 8, dans lequel la rainure a une profondeur en dessous du niveau du méplat qui se réduit au fur et à mesure qu'il s'approche de la seconde extrémité de la tige.

10. Dispositif de fixation selon l'une quelconque des revendications 6 à 9, dans lequel la paire de filets a la même hauteur au-delà du méplat.

11. Procédé de fixation comprenant la mise en rotation à l'intérieur d'un alésage dans un substrat d'un dispositif de fixation selon l'une quelconque des revendications précédentes, l'alésage ayant un diamètre inférieur à un diamètre extérieur du dispositif de fixation comprenant le au moins un filet, le dispositif de fixation étant utilisé pour fixer un élément au substrat.

12. Procédé de fixation selon la revendication 11, dans lequel le substrat est composé de bois ou d'un matériau de maçonnerie friable, tels que du béton cellulaire autoclavé, un plâtre cuit ou une couche d'enduit, une plaque de plâtre ou une brique rouge tendre ou une autre brique tendre.

13. Procédé de fixation selon la revendication 12, dans lequel le matériau de maçonnerie friable comprend un matériau de maçonnerie ayant une résistance à l'écrasement inférieure à 5N/mm².

14. Procédé de fixation selon l'une quelconque des revendications 11 à 13, dans lequel le dispositif de fixation est tourné à l'intérieur de l'alésage dans le substrat par application de la force axiale.

15. Procédé de fixation selon la revendication 14, dans lequel l'application de la force axiale comprend l'application de force dynamique intermittente le long de l'axe de la tige du dispositif de fixation.

16. Procédé de fixation selon la revendication 15, dans lequel la force axiale comprend une force percutante appliquée par martelage.
